# FASCICULE DE BREVET EUROPEEN

(11) **EP 1 233 342 B1**
(45) Date de publication et mention de la délivrance du brevet: **04.05.2011**
(21) Numéro de dépôt: 02290336.3
(22) Date de dépôt: 12.02.2002
(51) Int. Cl.: G06F 12/08

(54) **Contrôleur de cohérence pour ensemble multiprocesseur, module et ensemble multiprocesseur à architecture multimodule intégrant un tel contrôleur**
Kohärenzsteuerungsvorrichtung für eine Mehrprozessorvorrichtung, Modul und Multimodularchitektur-Mehrprozessorvorrichtung mit einer derartigen Steuervorrichtung
Coherency controller for a multiprocessor assembly, module and multimodule architecture multiprocessor assembly incorporating said controller

(30) Priorité: 15.02.2001 FR 0102089
(43) Date de publication de la demande: 21.08.2002
(73) Titulaire: Bull SAS, 78340 Les Clayes-sous-Bois (FR)
(72) Inventeur: Lesmanne, Sylvie, 78340 Les Clayes Sous Bois (FR); Bernard, Christian, 78320 Le Mesnil St Denis (FR); Koumou, Pamphile, 78450 Villepreux (FR)

(56) Documents cités:
- EP-A- 0 881 579
- US-A- 5 900 015
- US-A- 6 085 295

## Description

La présente invention concerne la réalisation d'ensembles multiprocesseurs symétriques de grande taille par assemblage de multiprocesseurs de base plus petits et comportant chacun en général de un à quatre microprocesseurs élémentaires (µP) associés chacun à une mémoire cache, une mémoire principale (MEM) et un circuit d'entrée et sortie (E/S) convenablement reliés entre eux par un réseau de bus approprié. L'ensemble multiprocesseur étant géré par un système d'exploitation OS commun (également appelé en anglais **Operating System**). En particulier l'invention concerne des contrôleurs de cohérence intégrés aux ensembles multiprocesseurs et destinés à assurer la cohérence mémoire de ces derniers notamment entre mémoires principales et caches, étant spécifié qu'une procédure d'accès à la mémoire est considérée comme « cohérente » si la valeur en retour à une instruction de lecture est toujours la valeur écrite par la dernière instruction de mémorisation. Dans la pratique on rencontre des incohérences sur mémoires caches d'une part dans des procédures d'Entrées/Sorties et d'autre part dans des situations où l'écriture immédiate dans la mémoire d'un multiprocesseur est autorisée sans avoir attendu et vérifié que tous les caches susceptibles d'avoir une copie de la mémoire aient été modifiés.

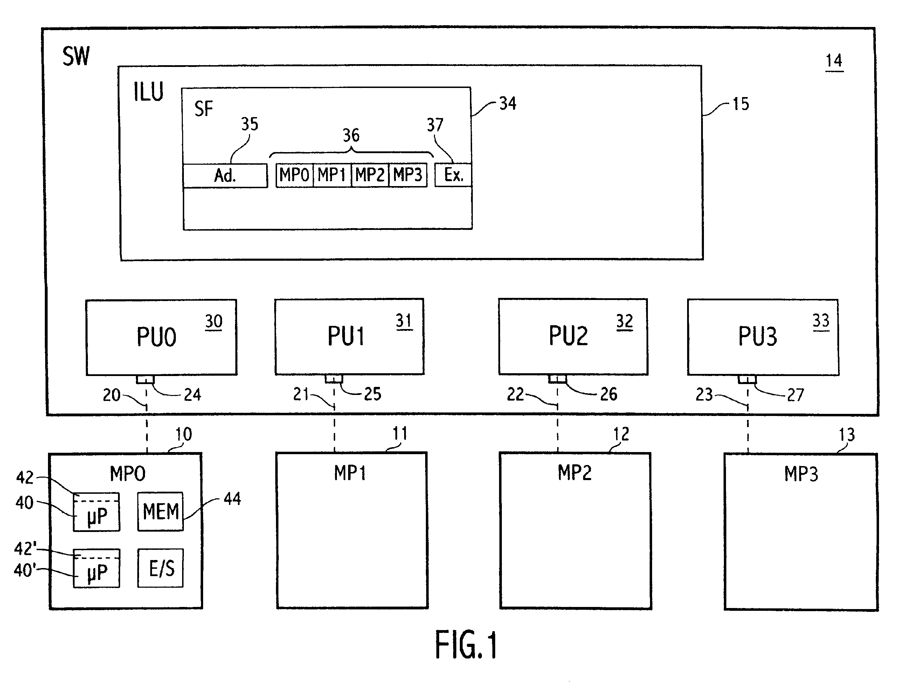

On connaît des multiprocesseurs réalisés selon le schéma de principe illustré à la figure 1 et à titre d'exemple non limitatif principalement constitués de quatre multiprocesseurs de base 10-13 MP0, MP1, MP2 et MP3, à deux microprocesseurs 40 et 40', respectivement reliés à un contrôleur de cohérence 14 SW (**Switch**) par des liaisons bi-point haut débit 20-23 gérées par quatre unités de gestion de port local 30-33 PU0, PU1, PU2 et PU3. Le contrôleur 14 connaît la répartition de la mémoire et les copies de lignes ou blocs mémoire entre la mémoire principale MEM 44 et les mémoires caches 42, 42' des processeurs et comprend, outre une ou plusieurs tables de routage et une table de fenêtre de collision (non représentées), un répertoire de filtrage de caches 34 SF (également appelé en anglais **Snoop Filter**) qui garde la trace des copies de portions de mémoire (lignes ou blocs) présentes dans les caches des multiprocesseurs. Pour la suite de l'exposé et par convention les termes « lignes » ou « blocs» seront, sauf indication contraire, utilisées indifféremment pour désigner l'un ou l'autre terme. Par ailleurs, le terme « mémoire » utilisé seul concerne la ou les mémoires principales associées aux multiprocesseurs.

Le répertoire de filtrage des caches 34, géré par l'unité de gestion ILU 15, est capable de transmettre des requêtes d'accès cohérent à un bloc mémoire (en vue d'une opération ultérieure telle que Lecture, Ecriture, Effacement, etc ..) soit à la mémoire principale concernée soit au(x) multiprocesseur(s) ayant une copie du bloc recherché dans leurs caches, après vérification de l'état mémoire du bloc concerné, afin de préserver la cohérence mémoire de l'ensemble. Pour ce faire le répertoire de filtrage des caches 34 comporte l'adresse 35 de chaque bloc répertorié associée à un vecteur de présence 36 de 4 bits (où 4 représente le nombre « n » de multiprocesseurs de base 10-13) et à un bit Ex d'état mémoire Exclusif 37.

Dans la pratique le bit MPO du vecteur de présence 36 est porté à 1 lorsque le multiprocesseur de base MPO correspondant (le multiprocesseur 10) comporte effectivement dans une de ses mémoires caches une copie d'une ligne ou d'un bloc de la mémoire 44.

Le bit d'état Exclusif Ex 37 appartient au Protocole de cohérence dit Protocole MESI qui d'une façon générale décrit les quatre états mémoire suivants :
Modifié (**Modified**) : selon lequel le bloc (ou la ligne) dans le cache a été modifié(e) par rapport au contenu de la mémoire (la donnée dans le cache est valide mais de la position mémoire correspondante est périmée).
Exclusif (**Exclusive**) : selon lequel le bloc dans le cache contient l'unique copie à l'identique des données de la mémoire aux mêmes adresses.
Partagé (**Shared**) : selon lequel le bloc dans le cache contient des données identiques à celles de la mémoire aux mêmes adresses (au moins un autre cache peut disposer des mêmes données).
Invalide (**Invalid**) : selon lequel les données dans le bloc sont invalides et ne peuvent être utilisées.

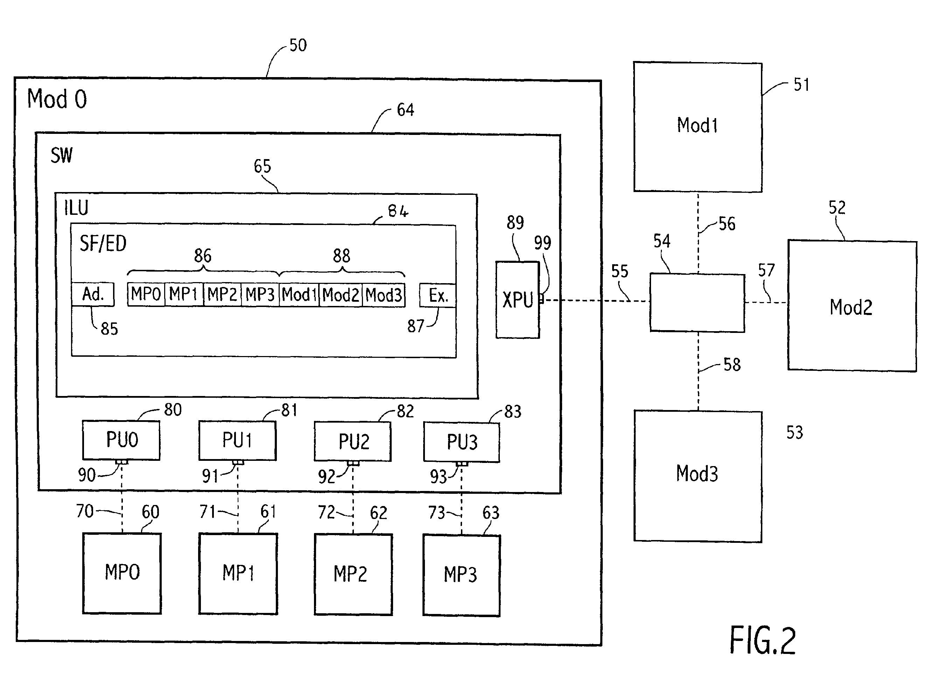

Dans la pratique, on utilise pour les multiprocesseurs illustrés à la figure 1 et la figure 2 un protocole MESI partiel selon lequel les états « Modifié » et « Exclusif » ne sont pas distingués :
- si un seul bit MPi = 1 et si le bit Ex = 1, alors l'état mémoire du bloc (ou de la ligne) sera Modifié ou Exclusif ;
- si un ou plusieurs bits MPi = 1 et si le bit Ex = 0, alors l'état mémoire du bloc sera Partagé ;
- si tous les bits MPi = 0, alors l'état mémoire sera Invalide.

Le répertoire de filtrage des caches 34 intègre un protocole de recherche et de surveillance doté d'une logique dite de « **snooping** ». Ainsi lors d'une requête d'accès en mémoire par un processeur le répertoire de filtrage de caches 34 procède à l'examen des mémoires caches qu'il gère. Lors de cette vérification le trafic s'effectue au travers des ports 24-27 des liaisons au haut débit bi-point 20-23 sans interférer avec les accès entre le processeur 40 et sa mémoire cache 42. Le répertoire de filtrage des caches est alors capable de traiter toutes les requêtes d'accès mémoire cohérents.

L'art antérieur le plus proche est donné par le document US 6 085 295.

L'architecture de multiprocesseur connue et brièvement décrite ci-avant n'est toutefois pas adaptée à des applications de grands serveurs multiprocesseurs symétriques de grandes tailles comportant plus de 16 processeurs.

En effet le nombre de multiprocesseurs de base pouvant être connectés à un contrôleur de cohérence (en pratique réalisé par un circuit intégré du type ASIC) est limité en pratique par :
- le nombre d'entrées /sorties du contrôleur qui selon les techniques de fabrication actuelles n'accepte qu'un nombre limité de liaisons bi-point (étant fait remarquer que ces liaisons bi-point sont nécessaires grâce à leur capacité de haut débit pour éviter les problèmes de latence ou d'attente lors des traitements des requêtes d'accès mémoire).
- la taille du contrôleur de cohérence qui contient le répertoire de filtrage des caches (la taille du répertoire de filtrage de caches doit être supérieure à la somme des tailles des répertoires des caches intégrés dans les multiprocesseurs de base).
- la bande passante d'accès au répertoire de filtrage des caches ou débit maximal en Mbits/sec obtenu en pratique par les liaisons bi-point constitue un goulot d'étranglement pour un serveur multiprocesseur de grande taille, le répertoire de filtrage de caches devant être consulté pour tous les accès cohérents des multiprocesseurs de base.

La présente invention a pour but de proposer un contrôleur de cohérence susceptible notamment de remédier aux inconvénients présentés ci-dessus ou d'en atténuer sensiblement les effets. L'invention a également pour objet de proposer des ensembles multiprocesseurs de grande taille à architecture multi-module, notamment des serveurs multiprocesseurs symétriques, à performances améliorées.

A cette fin l'invention propose un contrôleur de cohérence adapté pour être connecté à une pluralité de processeurs équipés d'une mémoire cache et à au moins une mémoire principale locale pour définir un module local de multiprocesseurs de base, ledit contrôleur de cohérence comportant un répertoire de filtrage de caches comportant un premier répertoire de filtrage SF destiné à assurer la cohérence entre la mémoire principale locale et les mémoires caches du module local, caractérisé en ce qu'il comporte de plus un port externe adapté pour être connecté à au moins un module de multiprocesseurs externe identique ou compatible avec ledit module local, le répertoire de filtrage de caches comportant un répertoire de filtrage complémentaire ED pour garder trace des coordonnées, notamment les adresses, des lignes ou blocs de la mémoire principale locale copiés du module local vers un module externe et assurer la cohérence entre la mémoire principale locale et les mémoires caches du module local et des modules externes.

Ainsi l'extension ED du répertoire de filtrage de caches est gérée comme le répertoire de filtrage de caches SF et permet de savoir s'il existe des copies de la mémoire du module local hors de ce module et de ne propager les requêtes d'origine locale qu'à bon escient vers les autres modules ou modules externes.

Cette solution trouve sa pleine efficacité dans les systèmes d'exploitation actuels qui commencent à gérer les affinités entre processus en cours de traitement et la mémoire qu'ils utilisent (avec regroupement automatique entre mémoires et multiprocesseurs concernés) . Dans ce cas la taille du répertoire ED nécessaire peut être inférieure à celle du répertoire SF et la bande passante de la liaison inter-modules peut être inférieure au double d'une liaison intra-module.

Selon un mode de réalisation préférentiel du contrôleur de cohérence selon l'invention, le contrôleur de cohérence comporte un vecteur de présence à « n » bits , où n est le nombre de multiprocesseurs de base dans un module (vecteur de présence locale), une extension du vecteur de présence de « N-1 » bits, où N-1 est le nombre total de modules externes connectés à la liaison externe (extension de présence distante), et un bit de statut Exclusif. Ainsi seules les lignes ou blocs de la mémoire locale peuvent avoir un vecteur de présence non nul dans le répertoire de filtrage de caches ED.

Cette caractéristique est également très intéressante car elle permet sans difficultés particulières de gérer sensiblement de la même façon les liaisons inter-modules et les liaisons intra-module, le protocole de gestion de contrôleur de cohérence étant étendu pour prendre en compte la notion de mémoire locale ou de mémoire distante dans les modules externes.

Avantageusement le contrôleur de cohérence comporte n unités de gestion des ports locaux PU connectés au n multiprocesseurs de base du module local et une unité de gestion XPU du port externe et une unité commune de gestion ILU des répertoires de filtrage SF et ED. De même l'unité de gestion XPU du port externe et les unités de gestion PU des ports locaux sont compatibles entre elles et utilisent des protocoles voisins largement communs.

L'invention concerne également un module de multiprocesseurs comportant une pluralité de processeurs équipés d'une mémoire cache et au moins une mémoire principale connectés à un contrôleur de cohérence défini ci-avant dans ses différentes versions.

L'invention concerne également un ensemble multiprocesseur à architecture multi-module comportant au moins deux modules de multiprocesseurs selon l'invention défini ci-dessus connectés entre eux directement ou indirectement par les liaisons externes des répertoires de filtrage des caches de leurs contrôleurs de cohérence.

Avantageusement les liaisons externes de l'ensemble multiprocesseur à architecture multi-module sont connectées entre elles travers d'un dispositif de commutation ou routeur. Tout aussi avantageusement le dispositif de commutation ou routeur comporte des moyens de gestion et/ou de filtrage des données et/ou requêtes en transit.

L'invention concerne également un serveur multiprocesseur architecture multi-module symétrique de grande taille, comportant « N » modules de multiprocesseurs identiques ou compatibles entre eux, chaque module comportant une pluralité de « n » multiprocesseurs de base équipés d'au moins une mémoire cache et d'au moins une mémoire principale locale et connectés à un contrôleur de cohérence local comportant un répertoire de filtrage local de caches SF destiné à assurer la cohérence locale entre la mémoire principale locale et les mémoires caches du module ci-après appelé module local, chaque contrôleur de cohérence local étant connecté par une liaison externe bi-point, éventuellement par l'intermédiaire d'un dispositif commutateur ou routeur, à au moins un module de multiprocesseurs externe audit module local, le contrôleur de cohérence comportant un répertoire de filtrage de caches complémentaire ED pour garder trace des coordonnées, notamment les adresses, des lignes ou blocs mémoire copiés du module local vers un module externe et assurer la cohérence entre la mémoire principale locale et les mémoire caches du module local et des modules externes.

Selon un mode de réalisation préférentiel du serveur multiprocesseur à architecture multi-module selon l'invention, chaque contrôleur de cohérence comporte un vecteur de présence à « n » bits destiné à indiquer la présence ou l'absence d'une copie d'un bloc ou ligne mémoire dans les mémoires caches des multiprocesseurs de base locaux (vecteur de présence locale), une extension du vecteur de présence de « N-1 » bits destinée à indiquer la présence ou l'absence d'une copie d'un bloc ou d'une ligne mémoire dans les mémoires caches des multiprocesseurs des modules externes (extension de présence distante) et un bit Ex de statut Exclusif.

Avantageusement le dispositif de commutation ou routeur comporte des moyens de gestion et/ou de filtrage des données et/ou requêtes en transit.

D'autres buts, avantages et caractéristiques de l'invention apparaîtront à la lecture de la description qui va suivre d'un mode de réalisation d'un contrôleur de cohérence et d'un serveur multiprocesseur à architecture multi-module selon l'invention donnés à titre d'exemple non limitatif en référence aux dessins ci-annexés dans lesquels:
- la figure 1 montre une représentation schématique d'un serveur multiprocesseur selon un art antérieur connu et présenté dans le préambule du présent exposé; et
- la figure 2 montre une représentation schématique d'un serveur multiprocesseur à architecture multi-module selon l'invention avec un contrôleur de cohérence à fonction étendue selon l'invention.

L'ensemble ou serveur multiprocesseur à architecture multi-module illustré schématiquement à la figure 2 est principalement constitué de quatre (N = 4) modules 50-53 (Mod 0 à Mod 3) identiques ou compatibles entre eux et convenablement reliés entre eux au travers d'un dispositif de commutation ou routeur 54 par des liaisons haut débit bi-point respectivement 55 à 58. Par commodité seul le Mod 0 50 est illustré en détails à la figure 2.

A titre d'exemple non limitatif et par commodité de description, chaque module 50-53 est constitué de n = 4 ensembles multiprocesseurs de base 60-63 MPO-MP3 respectivement reliés à un contrôleur de cohérence 64 SW (**Switch**) par des liaisons bi-point haut débit 70-73 gérées par quatre unités de gestion PU0, PU1, PU2 et PU3 80-83 de port local 90-93. Toujours à titre d'exemple non limitatif chaque multiprocesseur de base MPO-MP3 60-63 est identique au multiprocesseur 10 déjà décrit en référence à la figure 1 et comporte deux processeurs 40, 40' avec leur mémoires caches 42, 42', au moins une mémoire principale commune, une unité d'entrée/sortie associés par un réseau de bus commun. D'une façon générale la structure et le mode opératoire des modules 50-53 sont voisins du serveur à multiprocesseur de la figure 1 et seront pas repris en détails tout du moins en ce qui concerne les points communs aux deux serveurs à multiprocesseurs. En particulier le serveur multiprocesseur à architecture multi-module de l'invention est également géré par un système d'exploitation du type OS commun à tous les modules.

Pour assurer la cohérence locale des accès mémoire au niveau de chaque module, le contrôleur de cohérence 64 de chaque module (par exemple le module 50) comporte un répertoire de filtrage étendu de caches SF/ED 84 auquel est affecté une double fonction :
- la fonction classique de « Snoop Filter » (SF) assurée localement au sein du module intégrant le contrôleur de cohérence concerné qui garde la trace des copies de portions de mémoire (lignes ou blocs) présentes dans les caches des huit processeurs présents dans le même module (en l'espèce le module 50) et présentée ci-avant en référence à la figure 1 ;
- la fonction étendue de répertoire externe (ED) qui garde la trace des lignes ou blocs de mémoire locale (c.à.d. appartenant au module 50) exportées vers les autres modules 51, 52 et 53.

Pour ce faire le répertoire de filtrage des caches 84, contrôlé par l'unité de gestion 65, comporte l'adresse 85 de chaque bloc répertorié associée à un vecteur de présence locale 86 de 4 bits (où 4 représente le nombre « n » de multiprocesseurs de base 60-63) et à un bit Ex d'état mémoire Exclusif 87 dont les caractéristiques et la fonction ont déjà été présentées en référence au serveur de la figure 1. Dans la pratique le bit MPO du vecteur de présence 86 est porté à 1 lorsque le multiprocesseur de base MPO correspondant (le multiprocesseur 60) comporte effectivement dans une de ses mémoires caches une copie d'une ligne ou d'un bloc de la mémoire principale intégrée à ce multiprocesseur MPO. De plus il est prévu une extension de présence distante 88 sur 3 bits du vecteur de présence (ou 3 représente le nombre N-1, avec N = 4 égal au nombre de modules du serveur multiprocesseur), le bit Mod1 de l'extension 88 étant porté à 1 lorsque le module 51 (le module Mod 1) comporte effectivement dans une de ses mémoires caches une copie d'une ligne ou d'un bloc mémoire appartenant au module 50 Mod 0. Dans la pratique le répertoire de filtrage de caches 84 SF/ED est constitué par la fusion des répertoires de filtrage SF et ED, étant fait remarquer que seules les lignes de la mémoire locale peuvent avoir une extension de vecteur de présence non nulle dans le répertoire ED.

Pour terminer, le contrôleur de cohérence 64 comporte une unité de gestion XPU 89 gérant le port externe 99 convenablement relié à la liaison bi-point 55 connectée au routeur 54. Dans la pratique les unités PU0-PU3 60-63 et XPU 89 utilisent des protocoles très voisins, notamment des protocole de communication, et ont sensiblement le même comportement :
- Pour toute requête d'accès cohérent venant d'un port local ou externe, l'unité (X)PU concernée transmet la requête à ILU 65 qui :
   _ renvoie au (X)PU émetteur l'état du répertoire de filtrage des caches,
   _ transmet la requête aux unités ayant une copie si nécessaire,
   _ ouvre dans l'ILU une fenêtre de collision si nécessaire (pour assurer un traitement en série et exhaustif des requêtes en cas de collision de requêtes associées à une même adresse mémoire).
- Pour toute requête émise par ILU, l'unité (X)PU concernée transmet la requête sur le port associé et transmet au destinataire toutes les réponses reçues du port.
- Les unités (X)PU gèrent les réponses attendues pour une requête cohérente et une fois toutes les réponses arrivées, ces unités (X)PU ferment la fenêtre de collision et demandent la mise à jour du répertoire de filtrage de caches avec les bons bits de présence et de statut. Un module qui émet des requêtes vers extérieur reçoit toujours une réponse pour fermer sa fenêtre de collision et mettre à jour son répertoire SF/ED.

Par ailleurs un échec (en anglais « **miss** ») pour la recherche d'une adresse locale dans le répertoire SF/ED entraîne un routage vers l'unité de port locale PU du module résidant (« **home** ») de l'adresse recherchée. De même un échec (« **miss** ») pour la recherche d'une adresse distante dans le répertoire SF/ED entraîne un routage vers l'unité de port externe XPU.

On notera que la fenêtre de collision principale est gérée dans le module résidant « **home** » avec une fenêtre de collision annexe gérée dans le module émetteur pour qu'un module n'émette qu'une seule requête sur la même adresse (réessais compris) et une fenêtre de collision annexe gérée dans le module cible pour que le répertoire SF/ED ne reçoive qu'une seule requête sur la même adresse.

Parmi les différences rencontrées entre les unités PU et XPU, on notera également que les requêtes/réponses envoyées sur le port externe sont accompagnées d'un masque porteur d'informations complémentaires désignant le ou les modules destinataires parmi les N-1 autres modules. Enfin sur une ligne distante un accès « **miss** » dans SF/ED si émis par PU est transmis sur le port externe et si émis par XPU recevra pour réponse le message « pas de copie locale ».

Ainsi le contrôleur de cohérence selon l'invention à port externe et à répertoire de filtrage de caches à vecteur de présence étendu et son implémentation dans un ensemble multiprocesseurs à architecture multi-module permet du gain substantiel dans la taille des répertoires de filtrage de caches et au niveau de la bande passante par rapport à une simple extrapolation du multiprocesseur de l'art antérieur présenté ci-avant.

L'invention n'est pas limitée à un ensemble multiprocesseurs à architecture multi-module à 32 processeurs ici décrit à titre d'exemple non limitatif mais concerne également des ensembles ou serveurs multiprocesseurs à 64 processeurs ou plus. De même sans sortir du cadre de l'invention le routeur 54 décrit comme un dispositif de commutation de base comporte des moyens de gestion et/ou de filtrage des données et/ou requêtes en transit.

## Revendications

1. Contrôleur de cohérence (64) adapté pour être connecté à une pluralité de processeurs (40,40') équipés d'une mémoire cache (42,42') et à au moins une mémoire principale locale (44) pour définir un module local (50) de multiprocesseurs de base (60), ledit contrôleur de cohérence (64) comportant un répertoire de filtrage de caches (84) comportant un premier répertoire de filtrage SF destiné à assurer la cohérence entre la mémoire principale locale (44) et les mémoires caches (42,42') du module local, **caractérisé en ce qu'**il comporte de plus un port externe (99) adapté pour être connecté à au moins un module de multiprocesseurs externe (51,52,53) identique ou compatible avec ledit module local (50), le répertoire de filtrage de caches (84) comportant un répertoire de filtrage complémentaire ED pour garder trace des coordonnées, notamment les adresses, des lignes ou blocs de la mémoire principale locale (44) copiés du module local (50) vers un module externe (51, 52, 53) et assurer la cohérence entre la mémoire principale locale (44) et les mémoires caches (42, 42') du module local (50) et des modules externes (51, 52, 53).

2. Contrôleur de cohérence (64) selon la revendication 1 **caractérisé en ce qu'**il comporte outre un vecteur de présence (86) à « n » bits , où n est le nombre de multiprocesseurs de base dans un module, une extension (88) de « N-1 » bits du vecteur de présence où N-1 est le nombre total de modules externes (51,52,53) connectés au port externe (99), et un bit de statut Exclusif (87).

3. Contrôleur de cohérence (64) selon la revendication 2 **caractérisé en ce que** le port externe (99) est connecté directement ou indirectement aux modules externes (51, 52, 53) par l'intermédiaire d'une liaison externe bi-point (55).

4. Contrôleur de cohérence (64) selon la revendication 2 **caractérisé en ce qu'**il comporte « n » unités de gestion PU (80-83) des ports locaux (90-93) connectées aux n multiprocesseurs de base (60-63) du module local (50), une unité de gestion XPU (89) du port externe (99) et une unité commune de gestion ILU des répertoires de filtrage SF/ED (84).

5. Contrôleur de cohérence (64) selon la revendication 4 **caractérisé en ce que** l'unité de gestion XPU (89) du port externe et les unités de gestion PU (80-83) des ports locaux sont compatibles entre elles et utilisent des protocoles voisins largement communs.

6. Module (50) de multiprocesseurs **caractérisé en ce qu'**il comporte une pluralité de multiprocesseurs (60-63) équipés d'au moins une mémoire cache (42, 42') et au moins une mémoire principale (44) et connectés à un contrôleur de cohérence (64) selon l'une des revendications 1 à 5.

7. Ensemble multiprocesseur à architecture multi-module **caractérisé en ce qu'**il comporte au moins deux modules de multiprocesseurs (50-53) selon la revendication 6 connectés entre eux directement ou indirectement par les ports externes (99) de leurs contrôleurs de cohérence (64).

8. Ensemble multiprocesseur selon la revendication 7, **caractérisé en ce que** lesdits ports externes (99) sont connectés entre eux au travers d'un dispositif de commutation ou routeur (54).

9. Ensemble multiprocesseur selon la revendication 8, **caractérisé en ce que** le dispositif de commutation ou routeur (54) comporte des moyens de gestion et/ou de filtrage des données et/ou requêtes en transit.

10. Serveur multiprocesseur à architecture multi-module symétrique de grande taille, **caractérisé en ce qu'**il comporte « N » modules de multiprocesseurs (50-53) identiques ou compatibles entre eux, chaque module comportant une pluralité de « n » multiprocesseurs de base (60-63) équipés d'au moins une mémoire cache (42) et d'au moins une mémoire principale locale (44) et connectés à un contrôleur de cohérence local (64) selon l'une quelconque des revendications 1 à 9, chaque contrôleur de cohérence local (64) étant connectée par une liaison externe bi-point (55), éventuellement par l'intermédiaire d'un dispositif commutateur ou routeur (54), à au moins un module de multiprocesseurs (51, 52, 53) externe audit module local.

## Claims

1. Coherence controller (64) adapted for being connected to a plurality of processors (40,40') equipped with a cache memory (42,42') and with at least one local main memory (44) in order to define a local module (50) of basic multiprocessors (60), said coherence controller (64) including a cache filter directory (84) comprising a first filter directory SF designed to guarantee coherence between the local main memory (44) and cache memories (42,42') of the local module, **characterized in that** it also includes an external port (99) adapted for being connected to at least one external multiprocessor module (51, 52, 53) identical to or compatible with said local module (50), the cache filter directory (84) including a complementary filter directory ED for keeping track of the coordinates, particularly the addresses, of the lines or blocks of the local main memory (44) copied from the local module (50) into an external module (51, 52, 53) and guaranteeing coherence between the local main memory (44) and the cache memories (42, 42') of the local module (50) and the external modules (51,52,53).

2. Coherence controller (64) according to claim 1, **characterized in that** it also includes an "n"-bit presence vector (86), where n is the number of basic multiprocessors in a module, an "N-1"-bit extension (88) of the presence vector, where N-1 is the total number of external modules (51,52,53) connected to the external port (99), and an Exclusive status bit (87).

3. Coherence controller (64) according to claim 2, **characterized in that** the external port (99) is connected directly or indirectly to the external modules (51,52,53) via an external two-point link (55).

4. Coherence controller (64) according to claim 2, **characterized in that** it includes "n" control units PU (80-83) of local ports (90-93) connected to the n basic multiprocessors (60-63) of the local module (50), a control unit XPU (89) of the external port (99) and a common control unit ILU of the filter directories SF/ED (84).

5. Coherence controller (64) according to claim 4, **characterized in that** the control unit XPU (89) of the external port and the control units PU (80-83) of the local ports are compatible with one another and use similar, largely common protocols.

6. Multiprocessor module (50), **characterized in that** it includes a plurality of multiprocessors (60-63) equipped with at least one cache memory (42,42') and at least one main memory (44) and connected to a coherence controller (64) according to any of claims 1 to 5.

7. Multiprocessor system with a multimodule architecture, **characterized in that** it includes at least two multiprocessor modules (50-53) according to claim 6, connected to one another directly or indirectly by the external ports (99) of the coherence controllers (64).

8. Multiprocessor system according to claim 7, **characterized in that** said external ports (99) are connected to one another through a switching device or router (54).

9. Multiprocessor system according to claim 8, **characterized in that** the switching device or router (54) includes means for managing and/or filtering the data and/or requests in transit.

10. Large-scale symmetric multiprocessor server with a multimodule architecture **characterized in that** it comprises "N" multiprocessor modules (50-53) that are identical or compatible with one another, each module comprising a plurality of "n" basic multiprocessors (60-63) equipped with at least one cache memory (42) and at least one local main memory (44) and connected to a local coherence controller (64) according to any one of claims 1 to 9, each local coherence controller (64) being connected by an external two-point link (55), possibly via a switching device or router (54), to at least one multiprocessor module (51,52,53) external to said local module.

## Patentansprüche

1. Kohärenz-Controller (64), der dazu ausgelegt ist, mit mehreren Prozessoren (40, 40'), die mit einem Cache-Speicher (42, 42') ausgerüstet sind, und mit wenigstens einem lokalen Hauptspeicher (44) verbunden zu werden, um ein lokales Basis-Multiprozessormodul (60) zu definieren, wobei der Kohärenz-Controller (64) ein Cache-Filterverzeichnis (84) mit einem ersten Filterverzeichnis SF, das dazu bestimmt ist, die Kohärenz zwischen dem lokalen Hauptspeicher (44) und den Cache-Speichern (42, 42') des lokalen Moduls sicherzustellen, enthält, **dadurch gekennzeichnet, dass** er außerdem einen externen Port (99) umfasst, der dazu ausgelegt ist, mit wenigstens einem externen Multiprozessormodul (51, 52, 53) verbunden zu werden, das gleich wie das lokale Modul (50) beschaffen oder damit kompatibel ist, wobei das Cache-Filterverzeichnis (84) ein komplementäres Filterverzeichnis ED umfasst, um die Spur der Koordinaten, insbesondere der Adressen der Zeilen oder Blöcke des lokalen Hauptspeichers (44), die vom lokalen Modul (50) in das externe Modul (51, 52, 53) kopiert sind, zu bewahren und um die Kohärenz zwischen dem lokalen Hauptspeicher (44) und den Cache-Speichern (42, 42') des lokalen Moduls (50) und der externen Module (51, 52, 53) sicherzustellen.

2. Kohärenz-Controller (64) nach Anspruch 1, **dadurch gekennzeichnet, dass** er außerdem einen Präsenzvektor (86) mit "n" Bits, wobei n die Anzahl von Basis-Multiprozessoren in einem Modul ist, einer Erweiterung (88) von "N - 1" Bits des Präsenzvektors, wobei N - 1 die Gesamtzahl externer Module (51, 52, 53), die mit dem externen Port (99) verbunden sind, ist, und einem Exklusivstatut-Bit (87) umfasst.

3. Kohärenz-Controller (64) nach Anspruch 2, **dadurch gekennzeichnet, dass** der externe Port (99 direkt oder indirekt mit den externen Modulen (51, 52, 53) über eine externe Zweipunktverbindung (55) verbunden ist.

4. Kohärenz-Controller (64) nach Anspruch 2, **dadurch gekennzeichnet, dass** er "n" Steuereinheiten PU (80-83) lokaler Ports (90-93), die mit den n Basis-Multiprozessoren (60-63) des lokalen Moduls (50) verbunden sind, eine Steuereinheit XPU (89) des externen Ports (99) und eine gemeinsame Steuereinheit (ILU) der Filterverzeichnisse SF/ED (84) umfasst.

5. Kohärenz-Controller (64) nach Anspruch 4, **dadurch gekennzeichnet, dass** die Steuereinheit XPU (89) des externen Ports und die Steuereinheiten PU (80-83) der lokalen Ports untereinander kompatibel sind und weitgehend gemeinsame, ähnliche Protokolle verwenden.

6. Multiprozessormodul (50), **dadurch gekennzeichnet, dass** es mehrere Multiprozessoren (60-63) umfasst, die mit wenigstens einem Cache-Speicher (42, 42') und mit wenigstens einem Hauptspeicher (44) ausgerüstet sind und mit einem Kohärenz-Controller (64) nach einem der Ansprüche 1 bis 5 verbunden sind.

7. Multiprozessor-Anordnung mit Multimodul-Architektur, **dadurch gekennzeichnet, dass** sie wenigstens zwei Multiprozessormodule (50-53) nach Anspruch 6 umfasst, die direkt oder indirekt über die externen Ports (99) ihrer Kohärenz-Controller (64) miteinander verbunden sind.

8. Multiprozessor-Anordnung nach Anspruch 7, **dadurch gekennzeichnet, dass** die externen Ports (99) über eine Durchschalt- oder Router-Vorrichtung (54) miteinander verbunden sind.

9. Multiprozessor-Anordnung nach Anspruch 8, **dadurch gekennzeichnet, dass** die Durchschalt- oder Router-Vorrichtung (54) Steuerungs- und/oder Filterungsmittel für durchgehende Daten und/oder Anforderungen umfasst.

10. Multiprozessor-Server mit großformatiger symmetrischer Multimodul-Architektur, **dadurch gekennzeichnet, dass** er "N" Multiprozessormodule (50-53) umfasst, die einander gleich oder untereinander kompatibel sind, wobei jedes Modul eine Mehrzahl von "n" Basis-Multiprozessoren (60-63) enthält, die mit wenigstens einem Cache-Speicher (42) und mit wenigstens einem lokalen Hauptspeicher (44) ausgerüstet sind und mit einem lokalen Kohärenz-Controller (64) nach einem der Ansprüche 1 bis 9 verbunden sind, wobei jeder lokale Kohärenz-Controller (64) über eine externe Zweipunktverbindung (55), eventuell über eine Durchschalt- oder Router-Vorrichtung (54), mit wenigstens einem Multiprozessormodul (51, 52, 53), das sich außerhalb des lokalen Moduls befindet, verbunden ist.
